# EUROPÄISCHE PATENTSCHRIFT

(11) **EP 0 961 082 B1**
(45) Veröffentlichungstag und Bekanntmachung des Hinweises auf die Patenterteilung: **11.08.2004**
(21) Anmeldenummer: 99890147.4
(22) Anmeldetag: 05.05.1999
(51) Int. Cl.: F24D 3/08, F24D 19/10

(54) **Einrichtung zur Heizung und Warmwasserbereitung**
Installation for heating and hot water production
Installation de chauffage et de préparation d'eau chaude

(30) Priorität: 29.05.1998 AT 36098 U
(43) Veröffentlichungstag der Anmeldung: 01.12.1999
(73) Patentinhaber: GREENPOWER Anlagenerrichtungs- und Betriebs-GmbH, 1103 Wien (AT)
(72) Erfinder: Dötzl, Heinz, 2263 Waidendorf Dürnkrut (AT); Dorfmeister, Karl Dipl.-Ing. Dr., 3370 Ybbs a.d. Donau (AT)
(74) Vertreter: Rippel, Andreas, Dipl.-Ing.

(56) Entgegenhaltungen:
- EP-A- 0 806 612
- AT-B- 390 833
- DD-A- 266 159
- GB-A- 2 203 525
- NL-A- 8 502 349

## Beschreibung

Die Erfindung bezieht sich auf eine Einrichtung zur Heizung und Warmwasserbereitung, mit einem Wärmeerzeuger, einem mit zwei Wärmetauschern ausgestatteten Warmwasserspeicher sowie Vor- und Rücklaufleitungen der Heizung.

In Nah- und Fernwärmesystemen ist es zur Zeit üblich, die Einrichtungen für die Wärmeerzeugung (Heizkessel, Wärmepumpen, Auskoppelanlagen) auf eine zu erwartende mittlere Wärmebedarfsbelastung auszulegen, egal ob es sich dabei um reine Heizungssysteme oder um kombinierte Heizungs/Warmwassererwärmungsanlagen handelt. Bereits bei der Projektierung zu Grunde zu legende Spitzenbelastungen werden durch Spitzenheizkessel in den Wärmezentralen bzw. durch Heizungspufferspeicher, die sowohl in den Wärmezentralen selbst als auch dezentral bei den Wärmeabnehmern untergebracht sein können, abgedeckt.

Der Nachteil der bisherigen Ausfuhnmgstechnik besteht vor allem im hohen Kostenfaktor, der sich besonders beim Einsatz von sogenannten "alternativen Energien" und hier wiederum besonders bei kleinen und mittleren Versorgungssystemen negativ auswirkt und die Realisierung dieser umweltfreundlichen Wärmeversorgungsanlagen oft in Frage stellt.

In der AT 390 833 B ist eine Einrichtung der eingangs genannten Art beschrieben, bei der der Speicher in eine untere Wärmespeicherzone und eine obere Brachwasserzone unterteilt ist. Die beiden Wärmetauscher sind dabei in Reihe geschaltet, wodurch nur die Nutzung des halben Speicherinhaltes zu Wärmespeicherzwecken möglich ist. Überdies ist durch die Reihenschaltung der Wärmetauscher auch ein wesentlich höherer Anlagenwiderstand zu überwinden.

Bei der Einrichtung nach EP 0 806 612 A2 haben beide Wärmetauscher getrennte Kreisläufe, nämlich einen Kreislauf für ein höheres Temperaturniveau und einen Kreislauf für ein niedriges Temperaturniveau. Es wird demnach nur ein Kreislauf für ein höheres Temperaturniveau genutzt.

In der NL 8 502 349 A ist eine Einrichtung beschrieben, bei der ein Wärmetauscher in einem Hauptreservoir, und ein Wärmetauscher in einem Hilfsreservoir angeordnet ist. Beide Reservoire sind durch einen schmalen Durchgang miteinander verbunden.

Aufgabe der Erfindung ist es, eine Einrichtung vorzuschlagen, mit deren Hilfe der Wärmeinhalt eines Warmwasserspeichers auch bei Ausfall bzw. Überlastung des Wärmeerzeugers optimal genützt werden kann.

Die Erfindung löst diese Aufgabe dadurch, daß beide Wärmetauscher einzeln mittels hydraulischen Steuerorganen wahlweise an den Ausgang des Wärmeerzeugers und/oder den Rücklauf der Heizung anschließbar sind. Zweckmäßig ist ein Wärmetauscher nahe einem Kaltwasserzulauf des Warmwasserspeichers, der andere Wärmetauscher nahe einem Warmwasserablauf des Warmwasserspeichers angeordnet.

Durch die Erfindung wird erreicht, daß der maximal mögliche Wärmeinhalt eines Warmwasserspeichers (Boiler) einer Nah- bzw. Fernwärmeübergabestation genutzt und durch das Abarbeiten dieses Wärmeinhaltes die Aufrechterhaltung der Heizungs- und Brauchwassererwärmungsfunktionen des Wärmeabnehmers sichergestellt wird; auch wenn es zu Unterbrechungen oder Störungen der Nah- bzw. Fernwärmeversorgung kommt.

Zur Erzielung einer optimalen Wirkung wird insbesondere vorgeschlagen, daß ein hydraulisches Steuerorgan als Regelventil ausgebildet ist, das am Kreuzungspunkt zwischen einer vom Vorlauf zu den beiden Wärmetauschern führenden Leitung und dem Rücklauf angeordnet ist, und ein zweites hydraulisches Steuerorgan als Dreiwegventil ausgebildet ist, von dem ein Anschluß zum Regelventil, die beiden anderen Anschlüsse zu den beiden Wärmetauschern führt.

Es ist ferner zweckmäßig, wenn zwischen den beiden hydraulischen Steuerorganen eine Umwälzpumpe angeordnet ist.

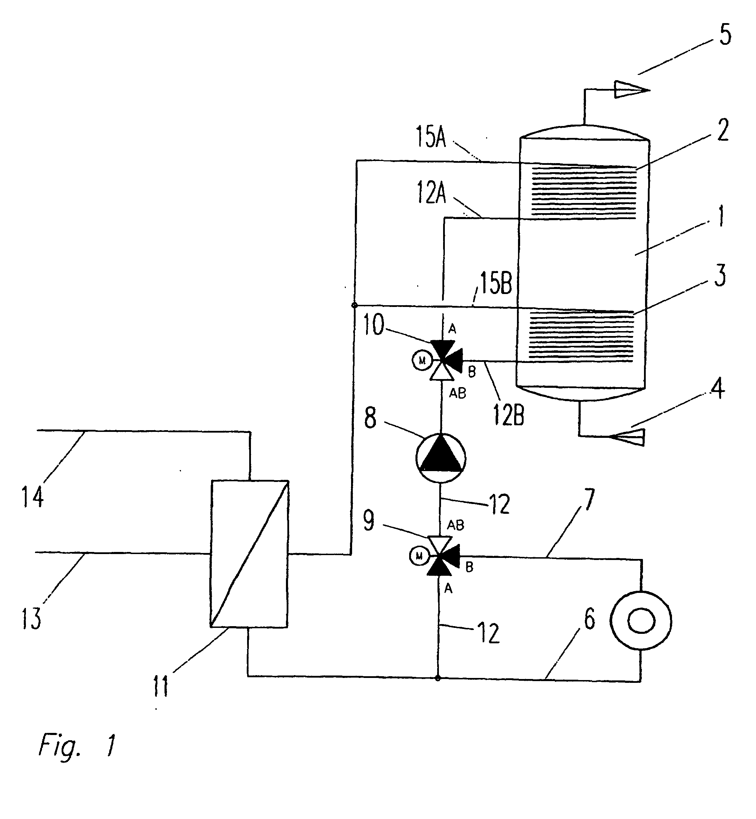

Im Folgenden wird die Erfindung anhand der Zeichnungen näher erläutert:
Es zeigen
Fig. 1 die schematische Darstellung einer erfindungsgemäßen Einrichtung,
Fig. 2 bis 6 die hydraulische Schaltung bei Speicher-Volladung (Fig. 2), bei Heizung/Speicher-Entladung (Fig.3), bei Speicher-Spitzenladung (Fig.4), bei Heizung/Speicher-Ecoladung (Fig. 5), und bei Heizung/Speicher-Kombibetrieb (Fig. 6);
Fig. 7 einen Schnitt durch einen bei einer erfindungsgemäßen Einrichtung verwendeten Warmwasserspeicher und
Fig. 8 eine Ansicht dieses Speichers.

Ein Warmwasserspeicher 1 besitzt einen Kaltwasserzulauf 4, einen Warmwasserablauf 5 sowie zwei dem Wärmebedarf entsprechende Wärmetauscher 2 und 3. Weiters ist der Vorlauf 6 und der Rücklauf 7 einer Heizung angeschlossen. Vom Vorlauf 6 führt über die beiden Ventile 9,10 eine Leitung 12 zu den Anschlüssen 12A und 12B der beiden Wärmetauscher 3,4. Die Anschlüsse 15A und 15B der Wärmetauscher 2 und 3 sind mit einem Wärmeerzeuger 11 verbunden.

Die beiden Wärmetauscher 2, 3 können je nach Betriebsartenwahl unterschiedlich angespeist werden.

Der Aufbau der für die Betriebsarten erforderlichen Schaltung besteht aus einer Umwälzpumpe 8, einem 3-Wege-Regelventil 9 und einem 3-Wege-Umschaltventil 10. Die beiden Ventile 9,10 besitzen je Anschlüsse A, B und AB.

Der Warmwasserspeicher 1 mit den beiden Wärmetauschern 2 und 3 sowie die Heizung mit Vorlauf 6 und Rücklauf 7 wird im Beispiel aus einem Fernwärmenetz mit einem Vorlauf 13 zu einem Wärmetauscher 11 als Wärmeerzeuger sowie einem Rücklauf 14 mit einem Kombinationsventil versorgt.

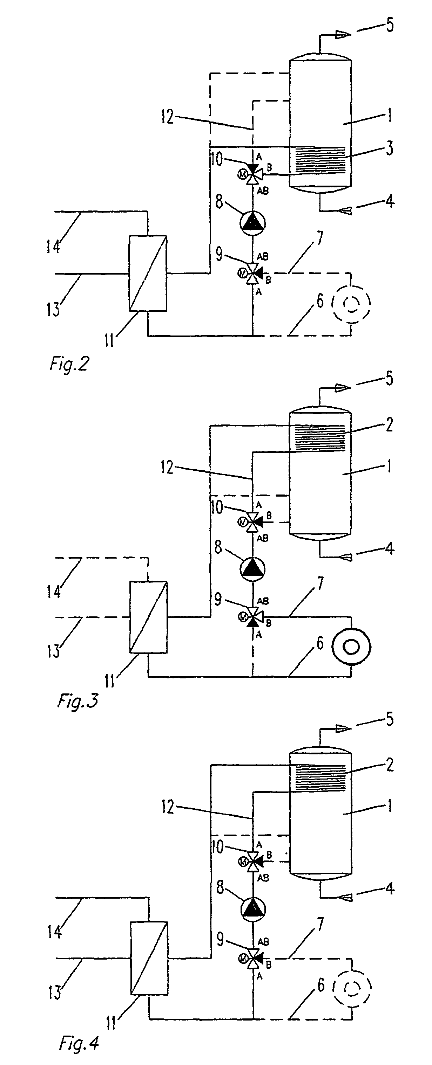

In der Betriebsart "Speicher-Volladung" (Fig.2) erfolgt durch entsprechende Steuerung der Ventile 9, 10 die Anspeisung des Warmwasserspeichers 1 aus dem Fernwärmenetz durch den Wärmetauscher 3; die Heizung ist nicht aktiv, z.B. bei Nachtabsenkung, und der Warmwasserspeicher 1 wird vollständig aufgeladen. Beim Regelventil 9 ist dabei A geöffnet, B geschlossen, beim Umschaltventil 10 ist B geöffnet und A geschlossen.

In der Betriebsart "Heizung/Speicher-Entladung" (Fig. 3) besteht durch entsprechende Steuerung der Ventile 9, 10 keine Versorgung aus dem Fernwärmenetz und die Beaufschlagung der Heizung erfolgt durch Entladung des Warmwasserspeichers 1 über den Wärmetauscher 2. Diese Betriebsart bewirkt einen Spitzenausgleich bzw. eine Notversorgung. Beim Regelventil 9 ist dabei B geöffnet und A geschlossen; beim Umschaltventil 10 ist A geöffnet und B geschlossen.

In der Betriebsart "Speicher-Spitzenladung" (Fig.4) kann durch entsprechende Steuerung der Ventile 9, 10 eine kurzfristige Sofortladung des Warmwasserspeichers 1 über den Wärmetauscher 2, z.B. nach einer Entladephase, erfolgen. Dabei ist beim Regelventil 9 A geöffnet, B geschlossen, beim Umschaltventil 10 A geöffnet, B geschlossen.

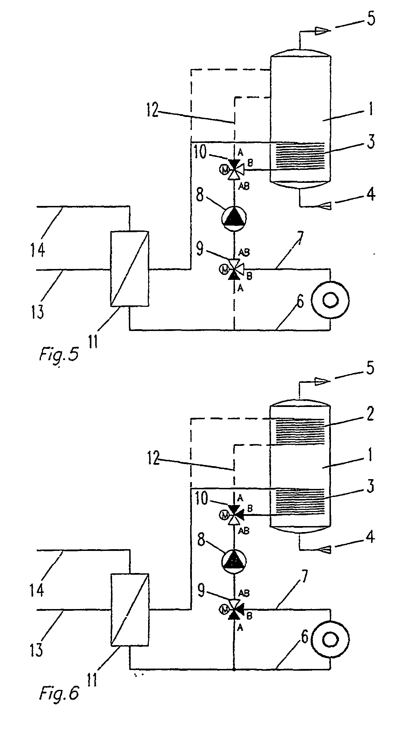

In der Betriebsart "Heizung/Speicher-Ecoladung" (Fig. 5) wird bei keiner Warmwasseranforderung der Rücklauf 7 durch den Wärmetauscher 3 geleitet und somit das zufließende Kaltwasser vorgewärmt. Dadurch wird die Spreizung im primärseitigen Fernwärmenetz wesentlich erhöht, die umzuwälzende Wassermenge auf ein optimales Minimum reduziert und dadurch die Wirtschaftlichkeit des Gesamtsystems wesentlich erhöht. Beim Regelventil 9 ist dabei B geöffnet, A geschlossen, beim Umschaltventil 10 derAnschluß B geöffnet, der Anschluß A geschlossen.

Die Steuerung der Ventile 9, 10 kann in bekannter Weise über entsprechende Wärmefühler aber auch händisch erfolgen.

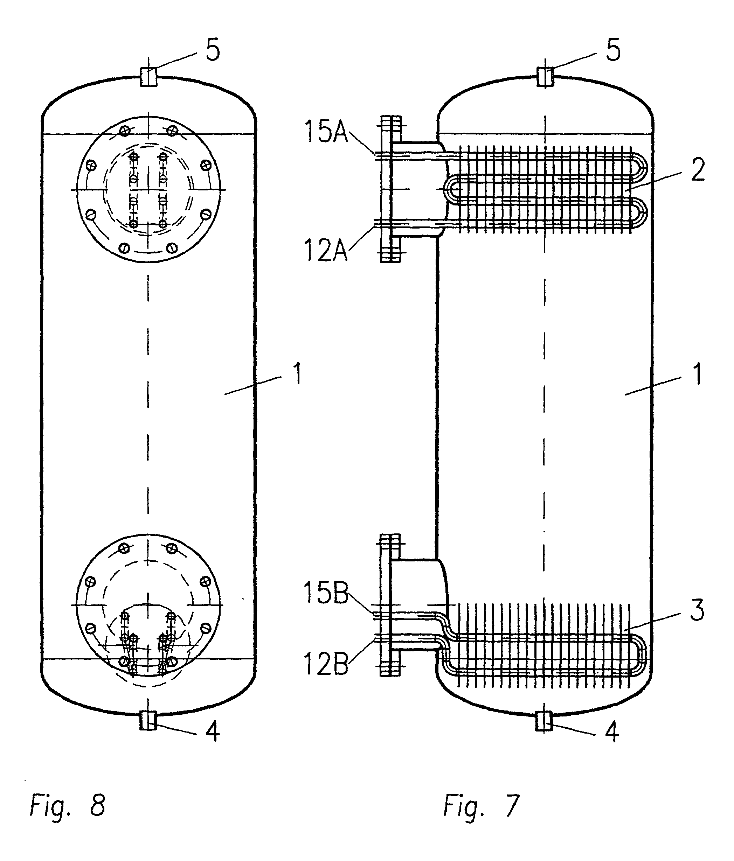

In der Betriebsart "Heizung/Speicher-Kombibetrieb" (Fig.6) wird der Warmwasserspeicher 1 sowohl durch die Restwärme des Rücklaufes 7 als auch direkt aufgeladen. Das Regelventil 9 wird dabei nach einer PI-Funktion in Abhängigkeit vom Energiebedarf der Heizung und der festgelegten Temperatur, z.B. 90° C , des zu erwärmenden Wassers angesteuert. Das Regelventil 9 regelt dabei das Mischungsverhältnis.

Im Rahmen der Erfindung sind zahlreiche Abänderungen möglich. So kann die erfindungsgemäße Einrichtung auch im Zusammenhang mit einem beim Verbraucher stehenden Kessel od. dgl. eingesetzt werden. Es wäre auch möglich, statt z.B. dem 3-Wegventil 9 ein 4-Wegventil einzuschalten, wobei der vierte Weg zum Wärmeerzeuger 1 fuhren würde.

## Patentansprüche

1. Einrichtung zur Heizung und Warmwasserbereitung, mit einem Wärmeerzeuger (11), einem mit zwei Wärmetauschern (2,3) ausgestatteten Warmwasserspeicher (1) sowie Vor- und Rücklaufleitungen (6,7) der Heizung, **dadurch gekennzeichnet, daß** beide Wärmetauscher (2,3) einzeln mittels hydraulischen Steuerorganen (9, 10) wahlweise an den Ausgang des Wärmeerzeugers (11) und/oder den Rücklauf (7) der Heizung anschließbar sind, wobei ein Wärmetauscher (3) nahe einem Kaltwasserzulauf (4) des Warmwasserspeichers (1), der andere Wärmetauscher (2) nahe einem Warmwasserablauf (5) des Warmwasserspeichers (1) angeordnet ist.

2. Einrichtung nach Anspruch 1, **dadurch gekennzeichnet, daß** ein hydraulisches Steuerorgan als Regelventil (9) ausgebildet ist, das am Kreuzungspunkt zwischen einer vom Vorlauf (6) zu den beiden Wärmetauschern (2, 3) führenden Leitung (12) und dem Rücklauf (7) angeordnet ist, und ein zweites hydraulisches Steuerorgan als Dreiwegventil (10) ausgebildet ist, von dem ein Anschluß (AB) zum Regelventil (9), die beiden anderen Anschlüsse (A, B) zu den beiden Wärmetauschern (2, 3) führt.

3. Einrichtung nach Anspruch 2, **dadurch gekennzeichnet, daß** zwischen den beiden hydraulischen Steuerorganen (9, 10) eine Umwälzpumpe (8) angeordnet ist.

## Claims

1. A device for heating and preparing hot water, comprising a heat generator (11), a hot water storage device (1) equipped with two heat exchangers (2, 3) and heating flow and return pipes (6, 7), **characterised in that** both heat exchangers (2, 3) can be connected individually as desired to the output of the heat generator (11) and/or the heating return (7) by means of hydraulic control members (9, 10), wherein the heat exchanger (3) is arranged close to the cold water intake (4) of the hot water storage device (1) and the other heat exchanger (2) is arranged close to a hot water outlet (5) of the hot water storage device (1).

2. The device according to claim 1, **characterised in that** a hydraulic control member is constructed as a regulating valve (9) which is arranged at the crossing point between a pipe (12) leading from the flow pipe (6) to the two heat exchangers (2, 3) and the return (7) and a second hydraulic control member is constructed as a three-way valve (10) from which one connection (AB) leads to the regulating valve (9) and the other two connections (A, B) lead to the two heat exchangers (2,3).

3. The device according to claim 2, **characterised in that** a circulating pump (8) is arranged between the two hydraulic control members (9, 10).

## Revendications

1. Dispositif de chauffage et de préparation d'eau chaude, comportant un générateur de chaleur (11), un accumulateur d'eau chaude (1) équipé de deux échangeurs de chaleur (2, 3) ainsi que des conduites d'amenée et de renvoi (6, 7) du chauffage, **caractérisé en ce que** les deux échangeurs de chaleur (2, 3) peuvent être raccordés individuellement au moyen d'organes de commande hydrauliques (9, 10) au choix à la sortie du générateur de chaleur (11) et/ou à la conduite de renvoi (7) du chauffage, un échangeur de chaleur (3) étant disposé près d'une alimentation en eau froide (4) de l'accumulateur d'eau chaude (1), l'autre échangeur de chaleur (2) près d'une évacuation d'eau chaude (5) de l'accumulateur d'eau chaude (1).

2. Dispositif selon la revendication 1, **caractérisé en ce qu'**un organe de commande hydraulique se présente sous forme d'une soupape de réglage (9) qui est disposée à l'intersection entre une conduite (12) allant de la conduite d'amenée (6) aux deux échangeurs de chaleur (2, 3) et la conduite de renvoi (7) et un deuxième organe de commande hydraulique sous forme d'une soupape à trois distributions (10) dont un raccordement (AB) va vers la soupape de réglage (9) et les deux autres raccordements (A, B) vers les deux échangeurs de chaleur (2, 3).

3. Dispositif selon la revendication 2, **caractérisé en ce qu'**une pompe de circulation (8) est disposée entre les deux organes de commande hydrauliques (9, 10).
